# EUROPEAN PATENT APPLICATION

(11) **EP 1 523 210 A2**
(43) Date of publication of application: **13.04.2005**
(21) Application number: 04024100.2
(22) Date of filing: 08.10.2004
(51) Int. Cl.: H04Q 7/38

(54) **Dynamic allocation of timeslots in a mobile communication system**

(30) Priority: 10.10.2003 KR 2003070742
(71) Applicant: LG Electronics Inc., Seoul (KR)
(72) Inventor: Choi, Sung-Kyu, Gyeonggi-Do (KR)
(74) Representative: von Hellfeld, Axel, Dr. Dipl.-Phys.

(57) **Abstract**

A dynamic allocation method and system for a mobile communication system capable of monitoring a plurality of receive timeslots by an user equipment based on an arbitrarily set receive timeslot. A plurality of transmit timeslots, based on a data communication request, sends packet data to the plurality of receive timeslots. The plurality of transmit timeslot monitor the arbitrarily set receive timeslot to determine availability of the plurality of receive timeslots to receive packet data without monitoring individually each of the plurality of receive timeslots.

## Description

### BACKGROUND OF THE INVENTION

### Field of the Invention

The present invention generally relates to a method and system for allocating timeslots for a communication system, and in particular, to dynamically allocate timeslots for monitoring of a packet data transmission within a communication system (such as a global system for mobile communication (GSM)).

### Description of the Related Art

Users of mobile communication systems are demanding improved data services such as higher speed data transmission and longer battery life for their mobile devices such as mobile phones or cell phones. In one instance, user equipment (such as a mobile station) desires to transmit, for example, a multimedia communication containing an image signal. The image signal, for example a picture taken by a camera phone, consists of mega or gigabits of data. Traditionally, to efficiently transmit the image signal, a mobile communication system, such as a global system for mobile communication (GSM), allocates a plurality of uplink timeslots for transmission of the image signal. The mobile communication system, in addition, allocates a plurality of downlink timeslots corresponding to the plurality of uplink timeslots for receiving the image signal.

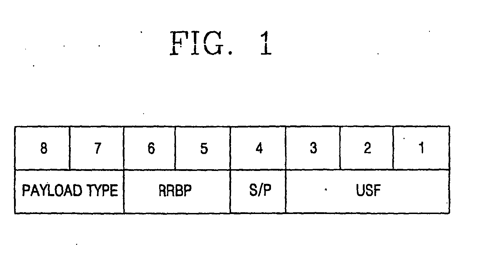

The plurality of downlink timeslots contains information pertaining to a medium access control (MAC) layer. The MAC layer is a data link layer for maximizing the allocation of resources, such as uplink and downlink timeslots, for transmission of the image signal. The MAC layer includes a header. The header, for example as shown in Figure 1, includes fields such as payload type, relative reserved block period (RRBP), serial to parallel (S/P), and uplink state flag (USF).

The user equipment monitors the header of each of the plurality of downlink timeslots to determine eligibility for transmitting the image signal. For instance, the user equipment monitors the contents of the USF for each of the plurality of downlink timeslots to certify the data transmission through the plurality of uplink timeslots. The monitoring results in decreased availability of the user equipment for other tasks, such as measuring availability of neighboring cell sites for handover of the image signal for achieving increased utilization mobile communication system resources. The monitoring task causes increased loading of the user equipment resulting in increased power consumption by the user equipment. The increased load results in increased waiting time and shortened usage time for the user equipment (such as decreased battery life for a cell phone).

Thus, there is a need for providing improvements over conventional timeslot allocation procedures.

### SUMMARY OF THE INVENTION

The present invention provides a dynamic allocation method and system for timeslots used in packet data transmission for mobile communication systems (such as GSM). More specifically, the dynamic allocation system and method monitors a packet data transmission from one station (such as a mobile station, user equipment, or cell phone) to another station (such as a base station) using one arbitrarily set receive timeslot (such as downlink timeslot) of one of a plurality of receive timeslots (such as downlink timeslots).

A plurality of transmit timeslots (such as uplink timeslots) are assigned to a corresponding plurality of receive timeslots (such as downlink timeslots). The plurality of transmit timeslots collectively have an arbitrarily set receive timeslot (such as an arbitrarily set downlink timeslot) for monitoring the contents (such as certifying the contents) of the plurality of receive timeslots (such as downlink timeslots). The arbitrarily set receive timeslot allows monitoring the contents (such as certifying the contents of a register) of the plurality of receive timeslots without the need to individually monitor the contents of each of the plurality of receive timeslots.

In one aspect, the arbitrarily set downlink timeslot is a data structure for a dynamic allocation of data communication timeslots such as for a GSM system. The arbitrarily set downlink timeslot includes a timeslot index. The timeslot index, for example, includes information for availability of the plurality of downlink timeslots to receive data transmitted from an uplink timeslot. In this aspect, the timeslot index is added to a data header of one arbitrarily set downlink timeslot among a plurality of downlink timeslots.

In another aspect, a dynamic timeslot allocation method includes a medium access control (MAC) entity for allocating resources (such as for packet data transmission) to monitor the plurality of uplink timeslots and/or the plurality of downlink timeslots. The MAC entity has three software modules. A first module allocates an uplink timeslot. A second module, connected with the first module, adds a timeslot index to a data header of an arbitrarily set downlink timeslot (allowing monitoring of the plurality of downlink timeslots). A third module, connected with the second module, transmits the arbitrarily set downlink timeslot in response to a data communication request.

In yet another aspect, the plurality of transmit timeslots are uplink timeslots in a GSM system. The uplink timeslots certify downlink timeslots for a data transmission by the user equipment, which equipment monitors an arbitrarily set downlink timeslot. The arbitrarily set downlink timeslot contains the uplink state flag (USE) of a medium access control (MAC) layer for each of the allocated plurality of downlink timeslots. When the USF is set for the plurality of downlink timeslots, packet data are transmitted until completion from the user equipment, through the plurality of uplink timeslots, to the plurality of downlink timeslots that correspond to the uplink timeslots.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals, in different figures, represent the same, equivalent, or similar features, elements, or aspects in accordance with one or more embodiments.

FIG. 1 is data structure illustrating a MAC header of a downlink timeslot according to the prior art.

FIG. 2 is a flow chart illustrating a method to dynamically allocate timeslots according to an embodiment of the present invention.

FIG. 3 is a data structure illustrating a MAC header of a downlink timeslot data header according to an embodiment of the present invention.

FIG. 4 is a block diagram illustrating a mobile communications device of an embodiment of the present invention.

FIG. 5 is a block diagram illustrating a UTRAN according to an embodiment of the present invention.

The accompanying drawings, which are included to provide a further understanding of the invention and are incorporated in and constitute a part of this specification, illustrate embodiments of the invention and together with the description serve to explain the principles of the invention.

### DETAILED DESCRIPTION OF THE PREFERRED EMBODIMENTS

The present invention provides a dynamic allocation method and system for timeslots used in packet transmission for mobile communication systems (such as GSM). More specifically, the dynamic allocation system and method provides packet data transmission from one station to another station using a plurality of transmit timeslots (such as uplink timeslots).

The plurality of transmit timeslots collectively have one arbitrarily receive timeslot (such as downlink timeslots) for monitoring (such as certifying) the contents of packet data transmitted to the plurality of receive timeslots (downlink timeslots). An arbitrarily set receive timeslot provides information regarding status of the plurality of receive timeslots including data contents. The user equipment monitoring the contents of the arbitrarily set receive timeslot obtains information related to the plurality of receive timeslots corresponding to the plurality of transmit timeslots.

The method requiring monitoring the arbitrarily set receive timeslot, instead of individually monitoring each of the plurality of downlink timeslots. This method reduces the number of tasks assigned to the user equipment. The reduction in tasks causes a decreased load applied to user equipment. The decreased load results in decreased power consumption of the user equipment (and longer battery life for the user equipment). By reducing the load, the user equipment is freed to accomplish other tasks such as certifying a neighboring cell for a handover of a data packet.

In one aspect, the arbitrarily set downlink timeslot is a data structure for dynamic allocation of data communication timeslots in a GSM system. In this aspect, a timeslot index for recording information relevant to the availability of each of the plurality of uplink timeslots allocated to the user equipment is utilized. The timeslot index is added to a data header of one arbitrarily set downlink timeslot among the plurality of downlink timeslots.

In another aspect, the plurality of transmit timeslots are uplink timeslots in a GSM system. An uplink state flag (USF) relates to availability of downlink timeslots. The USF is added to a medium access control (MAC) layer of the one arbitrarily set receive timeslot. The USF is stored in the arbitrarily set downlink timeslot. The station (such as user equipment) monitors the USF. The monitoring of the USF allows certification of the plurality of downlink timeslots allocated for a data transmission.

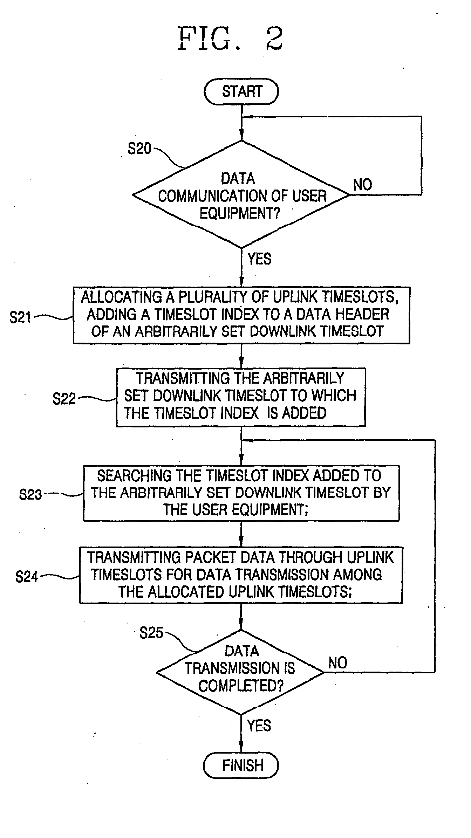

Figure 2 is a flow diagram illustrating a dynamic allocation method of a data communication timeslot for a mobile communication system such as a GSM system. A user needs to transmit data containing a large number of data packets in an efficient manner within a mobile communication system. For third generation (3GGP) mobile communication systems, a user will be able to selectively perform any of the following: a voice communication, a message communication by character signals, and a multimedia communication including an image signal. The message communication and the multimedia communication are transmitted in packet data format.

In case of a multimedia communication, an image signal that needs to be transmitted is a packet data which, for example, is in the mega to giga bit size range. To efficiently transmit the packet data, a plurality of uplink timeslots are simultaneously allocated to the user equipment. The packet data are simultaneously transmitted through the plurality of uplink timeslots to produce a realistic looking image.

The following is a description of the method for dynamically allocating timeslots in a mobile communication system (such as GSM) for transmitting packet data according to the present invention. As shown in step S20, the user equipment (such as a mobile station) performs a data communication request. As shown in step S21, the user equipment makes a data communication request for transmitting a packet data. A plurality of uplink timeslots are allocated to the user equipment by a mobile switching center (MSC). A plurality of downlink timeslots are assigned to each of the plurality of uplink timeslots. A timeslot index is added to a data header of an arbitrarily set downlink timeslot among a plurality of downlink timeslots. The header, for example, contains a USF, which certifies the contents of each of the plurality of downlink timeslots. Each of the plurality of downlink timeslots has a header. The timeslot index monitors the USE contents of a header of the arbitrarily set downlink timeslot.

As shown in step S22, the arbitrarily set downlink timeslot is transmitted including the timeslot index. As shown in step S23, the user equipment monitors the timeslot index added to the arbitrarily set downlink timeslot. As shown in step 24, the user equipment transmits the packet data through a corresponding uplink timeslot based on the results of the monitoring (search). As shown in step S25, the user equipment continues transmitting until completion of the packet data transmission.

In another aspect, before a user equipment performs a data communication, a mobile switching center (MSC) allocates a plurality of uplink timeslots to the user equipment. The allocation is in proportion the packet data size to be transmitted. The timeslot index is added to a MAC header. A data header is added to an arbitrarily set downlink timeslot (S21).

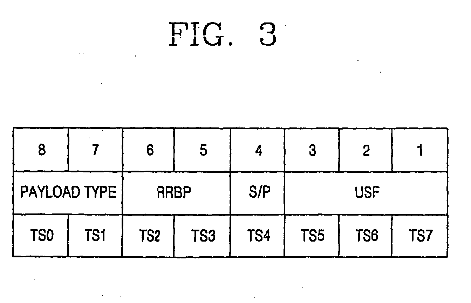

A structure of the MAC header constituting the data header of the arbitrarily set downlink timeslot to which the timeslot index is added will be explained in more detail in FIG. 3.

FIG. 3 is a data structure illustrating a MAC header of a downlink timeslot data header for a mobile communication system (such as GSM) according to the present invention. As shown, a timeslot index is added to a MAC header of a data header for a downlink timeslot in a GSM system. The header includes fields such as payload type, relative reserved block period (RRBP), serial to parallel (S/P), and uplink state flag (USF).

The USF field is maintained in the MAC header. The USF for a plurality of uplink timeslots is added to a MAC header of a data header of one arbitrarily set downlink timeslot. Therefore, the user equipment searches only one arbitrarily set downlink timeslot. This consolidated placement of all USF information in one location results in the user equipment having a reduced load, decreased power consumption, and increased channel capacity for handover packet data to a neighboring cell site.

A digital value, for example, '11' is recorded in a payload region of the MAC header of the downlink timeslot data header. The digital value indicates the added timeslot index. The timeslot index is constructed as a byte unit. A plurality of USFs are recorded in the plurality of downlink timeslots. The plurality of downlink timeslots equals the same number as a plurality of uplink timeslots allocated to the user equipment. The plurality of USFs are recorded as one in the timeslot index. The USF state determines whether the uplink timeslot can transmit the packet data.

Each of the 8 bits constitutes the timeslot index of the byte unit. The state information relating to uplink timeslots allocated for a data communication of the user equipment. The state information determines whether packet data can be transmitted through the allocated uplink timeslots. If at least two uplink timeslots are simultaneously allocated to the user equipment, the packet data is transmitted via the allocated uplink timeslots.

In one aspect, uplink timeslots are allocated to the user equipment. The uplink timeslots are TS0, TS1, and TS2 among the 8 uplink timeslots TS0, TS1, TS2, TS3, TS4, TS5, TS6, and TS7. The uplink timeslots perform a data transmission. A timeslot index of the byte unit is recorded as '11100000'. The packet data is transmitted via the TS0, TS1, and TS2. The user equipment receives a digital value "11", which value is recorded in the payload region of the MAC header. The digital value is the added timeslot index. In this example, the digital value of '11" corresponds to the TS0 and TS1 uplink timeslots being active.

As shown in Step S22, the arbitrarily set downlink timeslot, from which the timeslot index is added which contains an operational parameter, is transmitted from a mobile switching center (MSC) to the user equipment through a downlink operational parameter time slot. For example, a transmitted control signal or a message downloaded has the following format:

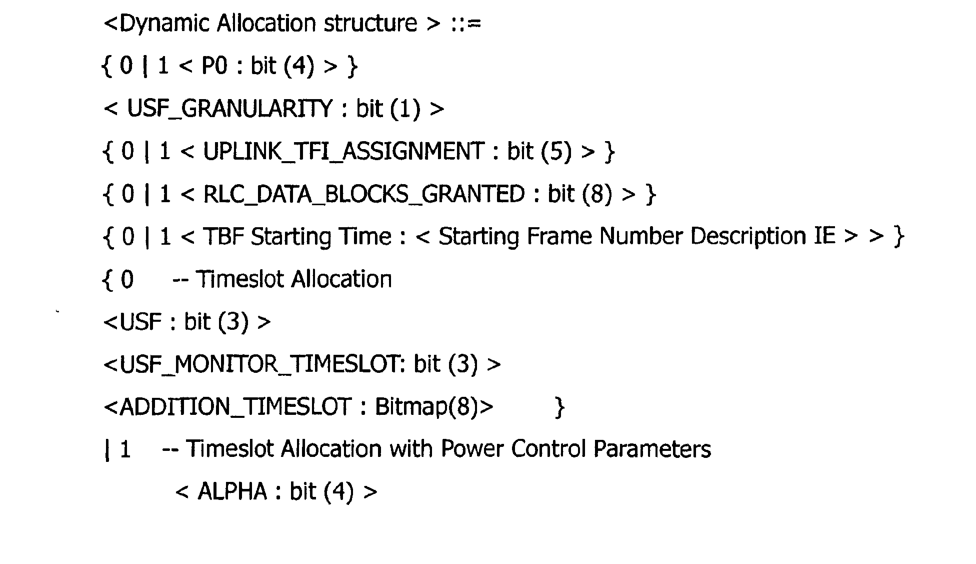

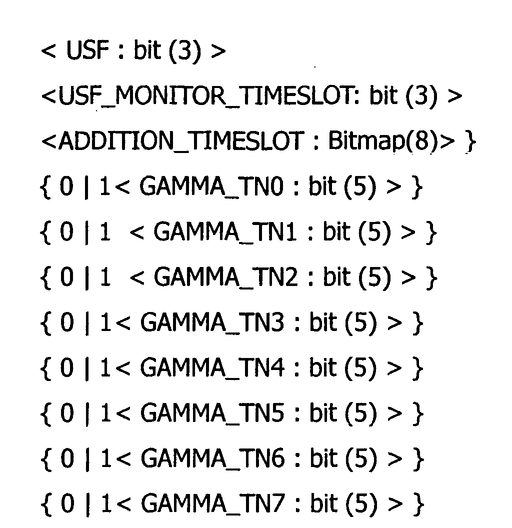

The downloaded control signal or message is allocated to an uplink channel for transmission of the packet data. The downloaded message, for example, includes data such as: an uplink assignment, an immediate assignment, a packet timeslot reconfigure, and a PDCH assignment.

The downloaded message is transmitted to the user equipment through the downlink operational parameter timeslot. The message informs the user equipment the position of the arbitrarily set downlink timeslot to which the timeslot index is added. The message includes a <USF: bit(3)> message, a <USF_MONITOR_TIMESLOT: bit(3)>, and <ADDITION_TIMESLOT: Bitmap(8)> message.

The user equipment preferably certifies uplink timeslots allocated for a data communication and determines whether a packet data transmission occurs to the uplink timeslots. The process for certification of the USF, as shown in Step 23 of FIG. 2, requires searching and analyzing a timeslot index of a MAC header (monitored by the user equipment) for the arbitrarily set downlink timeslot data header. The user equipment obtains the positional information of the downlink timeslot from which the timeslot index is added. Based on the retrieved positional information, the user equipment searches the corresponding downlink timeslot, extracts the timeslot index from the corresponding downlink timeslot, and analyzes the content of the extracted timeslot index to certify the allocated uplink timeslot or that these timeslots exists.

After the certification process, at the user equipment, the image signal is converted to packet data depending on the number of allocated certified uplink timeslots. The user equipment transmits the packet data to the corresponding number of the allocated uplink timeslots. As shown in Step 24, if the allocated uplink timeslots are more than two, the packet data are simultaneously transmitted to the two or more uplink timeslots.

After complete transmission of the packet data, the communication is finished. If the transmission is not completed, the system returns to searching and analyzing the timeslot index of the arbitrarily set downlink timeslot, repeating the above method until complete.

According to the present invention, the user equipment searches only one arbitrarily set downlink timeslot. The addition of the USF information for a plurality of uplink timeslots allocated for a data communication in a GSM system to a MAC header of a data header of said one arbitrarily set downlink timeslot. The remaining USF (an extra flag) of the remaining downlink timeslots can be allocated to other user equipment, resulting in the other user equipment reusing the remaining downlink timeslots when the uplink timeslot is waiting to send a packet data. Thus, the reuse of downlink timeslots provides improved channel capacity for the mobile communication system.

In this same embodiment, one USF is allocated to the user equipment regardless of the number of uplink timeslots allocated to the user equipment, thereby enabling data communication among 16 user equipments. Thus, the present invention can provide improved channel capacity for a mobile switching center (MSC).

In yet another aspect, the mobile communication system has a medium access (MAC) entity including 3 software modules. A first module allocates an uplink timeslot. A second module connected with the first module adds a timeslot index to data header of an arbitrarily set downlink timeslot among a plurality of downlink timeslots. A third module connected with the second module transmits the arbitrarily set downlink timeslot in response to a data communication.

In yet another aspect, the mobile communication system provides a MAC entity in a user equipment (UE). The MAC entity comprises three modules. A first module receiving an arbitrarily set downlink timeslot. A second module searching a timeslot index with the arbitrarily set downlink timeslot. A third module transmitting the packet data of an image signal via corresponding uplink timeslot in accordance with the searched timeslot index.

Here, it can be understood that the MAC entity in the communications network and that in the user equipment (UE) may consist of various software modules that are implemented by various types of hardware, such as microprocessors and memory devices having software codes and protocol data stored therein.

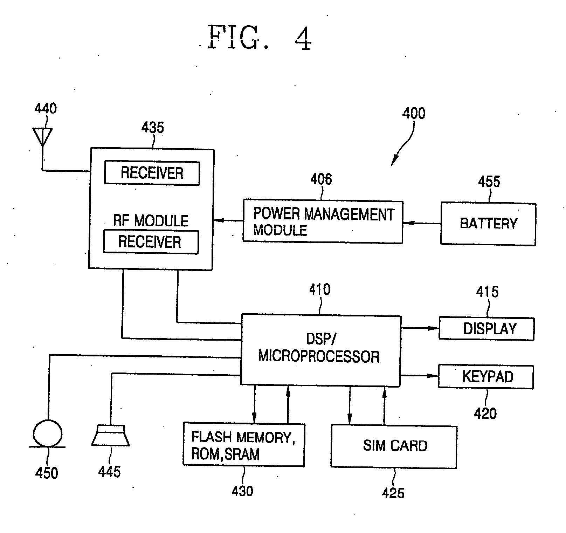

Referring to FIG. 4, a block diagram of a mobile communication device 100 of the present invention such as a mobile phone for performing the methods of the present invention. The mobile communication device 400 includes a processing unit 410 such as a microprocessor or digital signal processor, an RF module 435, a power management module 406, an antenna 440, a battery 455, a display 415, a keypad 420, a storage unit 430 such as flash memory, ROM or SRAM, a speaker 445 and a microphone 450.

A user enters instructional information, such as a telephone number, for example, by pushing the buttons of a keypad 420 or by voice activation using the microphone 450. The processing unit 410 receives and processes the instructional information to perform the appropriate function, such as to dial the telephone number. Operational data may be retrieved from the storage unit 430 to perform the function. Furthermore, the processing unit 410 may display the instructional and operational information on the display 415 for the user's reference and convenience.

The processing unit 410 issues instructional information to the RF module 135, to initiate communication, for example, transmit radio signals comprising voice communication data. The RF module 435 comprises a receiver and a transmitter to receive and transmit radio signals. The antenna 440 facilitates the transmission and reception of radio signals. Upon receive radio signals, the RF module 435 may forward and convert the signals to baseband frequency for processing by the processing unit 410. The processed signals would be transformed into audible or readable information outputted via the speaker 145, for example.

The processing unit 410 is adapted to perform the method as illustrated above in Figure 2. More specifically, the processing unit 410 is adapted to allocate a plurality of receive timeslots for signal transmission to another user that correspond to a plurality of transmit time slots, monitor an arbitrarily set receive time slot associated with the plurality of receive timeslots, receive a timeslot index from the arbitrarily set receive timeslot containing information relating to availability of the plurality of receive timeslots, and certify the plurality of transmit timeslots the messages for transmission through to the plurality of receive timeslots from which correspond in response to the value of the arbitrarily set receive timeslot and/or a communication request.

The processing unit 410 stores the messages received from and messages transmitted to other users in the storage unit 430, receive a conditional request for message input by the user, process the conditional request to read message data corresponding to the conditional request from the storage unit, and output the message data to the display unit 415. The storage unit 430 is adapted to store message data of the messages both received and transmitted.

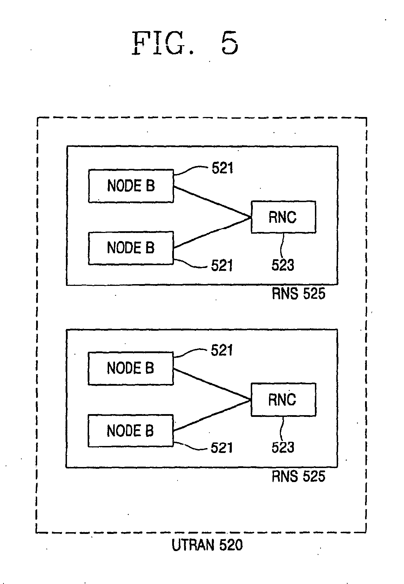

FIG. 5 illustrates a block diagram of a UTRAN 520 according to the preferred embodiment of the present invention. The UTRAN 520 includes one or more radio network sub-systems (RNS) 525. Each RNS 525 includes a radio network controller (RNC) 523 and a plurality of Node-Bs (base stations) 521 managed by the RNC. The RNC 523 handles the assignment and management of radio resources and operates as an access point with respect to the core network 30. Furthermore, the RNC 523 is adapted to perform the methods of the present invention.

The Node-Bs 521 receive information sent by the physical layer of the terminal 410 through an uplink, and transmit data to the terminal through a downlink. The Node-Bs 521 operate as access points, or as a transmitter and receiver, of the UTRAN 520 for the terminal 410. It will be apparent to one skilled in the art that the mobile communication device 400 may be readily implemented using, for example, the processing unit 410 or other data or digital processing device, either alone or in combination with external support logic.

By utilizing the present invention, the user of a mobile communication device may dynamically allocate timeslots, as described above in Figure 2. More specifically, a user equipment performs a request to dynamically allocate timeslots (S20 of FIG. 2). The user equipment makes a data communication request to transmit a packet data (S21 of FIG 2). A plurality of uplink timeslots are allocated to the user equipment by a mobile switching center (MSN), a plurality of downlink timeslots are assigned to each of the plurality of uplink timeslots, a timeslot index is added to a data header of an arbitrarily set downlink timeslot, and the arbitrarily set downlink timeslot is transmitted (S22 of FIG. 2). The user equipment monitors the timeslot index added to the arbitrarily set downlink timeslot (S23 of FIG. 3). The user equipment transmits the packet data through a corresponding uplink timeslot based on the results of the monitoring (search) (S24 of FIG. 2). The user equipment continues transmitting until completion of the packet data transmission (S25 of FIG. 2).

It will be apparent to one skilled in the art that the preferred embodiments of the present invention can be readily implemented using, for example, the processor 410 or other data or digital processing device, either alone or in combination with external support logic.

Although the present invention is described in the context of mobile communication, the present invention may also be used in any wireless communication systems using mobile devices, such as PDAs and laptop computers equipped with wireless communication capabilities. Moreover, the use of certain terms to describe the present invention should not limit the scope of the present invention to certain type of wireless communication system, such as UMTS. The present invention is also applicable to other wireless communication systems using different air interfaces and/or physical layers, for example, TDMA, CDMA, FDMA, WCDMA, etc.

The preferred embodiments may be implemented as a method, apparatus or article of manufacture using standard programming and/or engineering techniques to produce software, firmware, hardware, or any combination thereof. The term "article of manufacture" as used herein refers to code or logic implemented in hardware logic (e.g., an integrated circuit chip, Field Programmable Gate Array (FPGA), Application Specific Integrated Circuit (ASIC), etc.) or a computer readable medium (e.g., magnetic storage medium (e.g., hard disk drives, floppy disks, tape, etc.), optical storage (CD-ROMs, optical disks, etc.), volatile and non-volatile memory devices (e.g., EEPROMs, ROMs, PROMs, RAMs, DRAMs, SRAMs, firmware, programmable logic, etc.).

Code in the computer readable medium is accessed and executed by a processor. The code in which preferred embodiments are implemented may further be accessible through a transmission media or from a file server over a network. In such cases, the article of manufacture in which the code is implemented may comprise a transmission media, such as a network transmission line, wireless transmission media, signals propagating through space, radio waves, infrared signals, etc. Of course, those skilled in the art will recognize that many modifications may be made to this configuration without departing from the scope of the present invention, and that the article of manufacture may comprise any information bearing medium known in the art.

The logic implementation shown in the figures described specific operations as occurring in a particular order. In alternative implementations, certain of the logic operations may be performed in a different order, modified or removed and still implement preferred embodiments of the present invention. Moreover, steps may be added to the above described logic and still conform to implementations of the invention.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

As the present invention may be embodied in several forms without departing from the spirit or essential characteristics thereof, it should also be understood that the above-described embodiments are not limited by any of the details of the foregoing description, unless otherwise specified, but rather should be construed broadly as defined in the appended claims. Therefore all changes and modifications that fall within the metes and bounds of the claims, or equivalence of such metes and bounds are therefore intended to be embraced by the appended claims.

## Claims

1. A method for dynamic allocation of communication timeslots of a mobile communication system for the transfer of data from one station to another station, the method comprising:
allocating a plurality of transmit timeslots for transmission of a packet data;
generating a timeslot index in which includes information related to availability of a plurality of receive timeslots for receiving the packet data;
adding the timeslot index to a data header of an arbitrarily set receive timeslot among the plurality of receive timeslots; and
transmitting the arbitrarily set receive timeslot in response to a data communication request.

2. The method of claim 1, further comprising:
receiving by a mobile terminal of the arbitrarily set receive timeslot to determine status of plurality of receive timeslots;
monitoring the timeslot index which includes a status of the plurality of receive timeslots; and
transmitting the packet data from the plurality of transmit timeslots to a corresponding timeslot selected from the plurality of receive timeslots in accordance with the timeslot index.

3. The method of claim 1 wherein the plurality of transmit timeslots are uplink timeslots and the plurality of receive timeslots are downlink timeslots.

4. The method of claim 1 wherein the plurality of transmit timeslots are downlink timeslots and the plurality of receive timeslots are a plurality of downlink timeslots.

5. The method of claim 1 wherein the timeslot index includes an uplink state flag for
determining the status of the plurality of receive timeslots.

6. The method of claim 1 wherein the data header is a medium access control header for allocating avaiiabie resources of the mobiie communication system.

7. The method of claim 6 wherein the timeslot index is added to the medium access header of the arbitrarily set downlink timeslot.

8. The method of claim 1 wherein the one station is an user equipment and the other station is a base station and wherein the information is transmitted from the base station and the user equipment through an downlink operational parameter timeslot which is related to the arbitrarily set downlink timeslot in which the timeslot index is added.

9. The method of claim 1 wherein the data header is a Medium Access Control
Entity in user equipment comprising:
a first software module receiving the arbitrarily set receive timeslot,
a second software module searching the timeslot index within the arbitrarily set receive timeslot, and
a third module transmitting the packet data via a corresponding transmit timeslot in accordance with the value of the timeslot index.

10. The method of Claim 9 wherein the arbitrarily set receive timeslot is a downlink timeslot, the corresponding transmit timeslot is a corresponding uplink timeslot, a plurality of transmit timeslots are a plurality of uplink timeslots, and a plurality of receive timeslots are a plurality of downlink timeslots.

11. The entity of claim 10, wherein the third module certifies an uplink timeslot by analyzing bit information of the timeslot index and transmits packet data via the certified uplink timeslot.

12. The entity of claim 11, wherein the second and third modules repeat their operations until complete transmission of the packet data.

13. A mobile communication device for managing messages received from and transmitted to another user by a user of the mobile communication device, the mobile communication device comprising:
a processing unit adapted:
to allocate a plurality of receive timeslots for signal transmission to another user that correspond to a plurality of transmit timeslots from the user,
to monitor an arbitrarily set receive time slot associated with the plurality of receive timeslots,
to receive a timeslot index from the arbitrarily set receive timeslot containing information relating to the availability of the plurality of receive timeslots, and
to certify the plurality of transmit timeslots the messages for transmission of the message to the plurality of receive timeslots to which correspond in response to the value of the arbitrarily set receive timeslot.

14. The mobile communication device of claim 13, wherein the processing unit and storage unit are adapted to store the messages received in a first storage area and the transmitted messages in a second storage area separate from the first storage area.

15. The mobile communication device of claim 13, wherein the processing unit comprises a microprocessor.

16. A network for radio communication with a terminal in a mobile communication system, the network comprising:
at least one transmitter adapted to transmit packet data to a terminal using assigned power levels;
at least one receiver adapted to receive a acknowledgement signal from the terminal, the acknowledgment response indicating whether the transmitted packet data was correctiy received; and
a controller adapted:
to allocate a plurality of receive timeslots for receiving messages that correspond to a plurality of transmit timeslots for transmitting messages to another user, monitor an arbitrarily receive time slot of the plurality of receive timeslots,
to receive the acknowledgement signal which is a timeslot index from the arbitrarily receive timeslot, wherein the timeslot index includes information related to availability of the plurality of receive timeslots,
to certify the plurality of transmit timeslots for transmitting the message, and
to transmit the message, in packet data format, through the plurality of transmit timeslots that are certified to the plurality of receive timeslots in accordance with the timeslot index.

17. The network of claim 16, wherein the controller is further adapted to determine a corresponding power level for each of the plurality of packet data based on one of a channel state and a system state.
